# EUROPÄISCHE PATENTANMELDUNG

(11) **EP 1 946 881 A1**
(43) Veröffentlichungstag der Anmeldung: **23.07.2008**
(21) Anmeldenummer: 07000915.4
(22) Anmeldetag: 17.01.2007
(51) Int. Cl.: B23K 35/362

(54) **Zusatzwerkstoff zum Schweissen von Superlegierungen und Reparaturschweissverfahren mit Zusatzwerkstoff**

(71) Anmelder: SIEMENS AKTIENGESELLSCHAFT, 80333 München (DE)
(72) Erfinder: Ladru, Francis-Jurjen, Dr., 10629 Berlin (DE); Oppert, Andreas, 14612 Falkensee (DE); Reich, Gerhard, 10717 Berlin (DE); Wollnik, Adrian, 13585 Berlin (DE)

(57) **Zusammenfassung**

Tiefgehende Risse (4) können mit den bekannten Schweißverfahren, wie z.B. Laser- oder Plasmaschweißen nicht repariert werden, da der Riss (4) nicht bis in eine Tiefe hinein vollständig aufgeschmolzen und damit verschlossen werden kann.
Beim erfindungsgemäßen Verfahren werden Zusatzwerkstoffe (7) bzw. oberflächenaktive Suspensionen verwendet, die die Umschmelztiefe durch Veränderung der Oberflächenspannung und Absorption des Laserstrahls erhöhen, so dass auch tiefe Risse (4) vollständig verschlossen werden können.
Die Zusatzstoffe enthalten SIO₂, MnO₂, NaF, G₂O₃, TiO₂, Ti, Fe₂O₃, AlF₃, Te, Se, ZnO, oder eine Kombination dieser Verbindungen.

## Beschreibung

Die Erfindung betrifft einen Zusatzwerkstoff zum Schweißen und ein Reparaturverfahren, bei dem Risse unter Verwendung eines Zusatzwerkstoffs geschweißt werden.

Bei vielen Bauteilen werden Risse, die während des Giessens entstehen oder nach dem Einsatz des Bauteils entstanden sind, repariert. Dies kann durch Löten oder Schweißen erfolgen. Beschädigte Stellen werden oft großflächig entfernt und durch zeitaufwendiges mehrfaches Auftragsschweißen mit anschließendem Rekontuierungsprozess repariert. Dies ist jedoch arbeits- und zeitaufwändig. Das Problem besteht nämlich bei tiefen Rissen darin, dass diese mit den bekannten Schweißverfahren bei Risstiefen bis zu 4mm Tiefe durch Umschmelzen von Material um den Riss nicht repariert werden können.

Es ist daher Aufgabe der Erfindung ein Verfahren aufzuzeigen, bei dem o. g. Problem überwunden wird.

Die Aufgabe wird gelöst durch einen Zusatzwerkstoff gemäß Anspruch 1 und ein Reparaturschweißverfahren gemäß Anspruch 25.

In den Unteransprüchen sind weitere vorteilhafte Maßnahmen aufgelistet, die in vorteilhafter Art und Weise miteinander kombiniert werden können.

Es zeigen
- Figur 1: eine Gasturbine,
- Figur 2: eine Turbinenschaufel,
- Figur 3: eine Brennkammer,
- Figur 4: eine Liste von Superlegierungen und
- Figur 5: einen zu reparierenden Riss mit Zusatzwerkstoff.

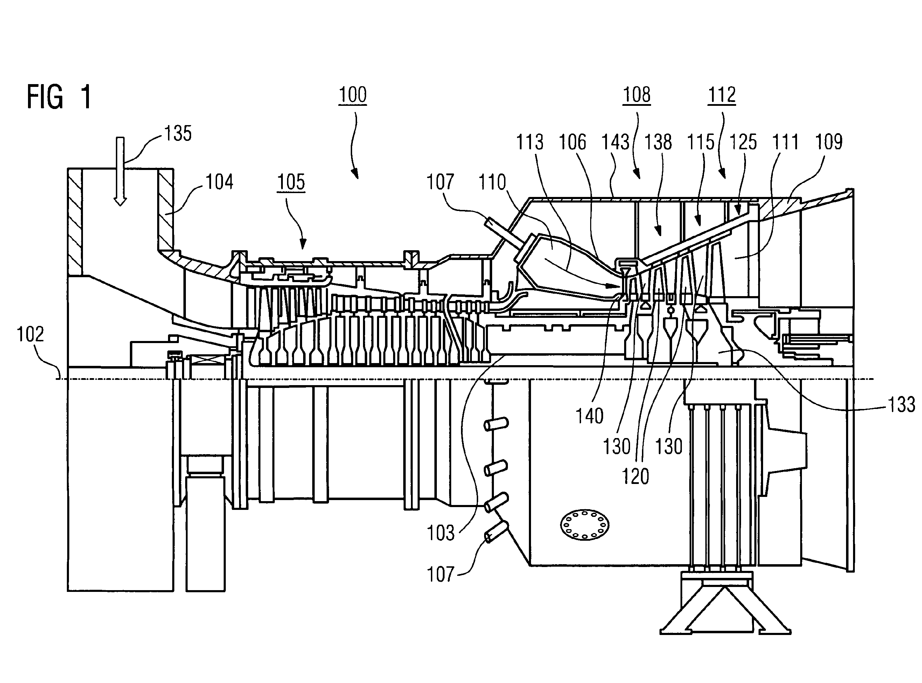

Die Figur 1 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1, die bzgl. der chemischen Zusammensetzung Teil dieser Offenbarung sein sollen.

Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

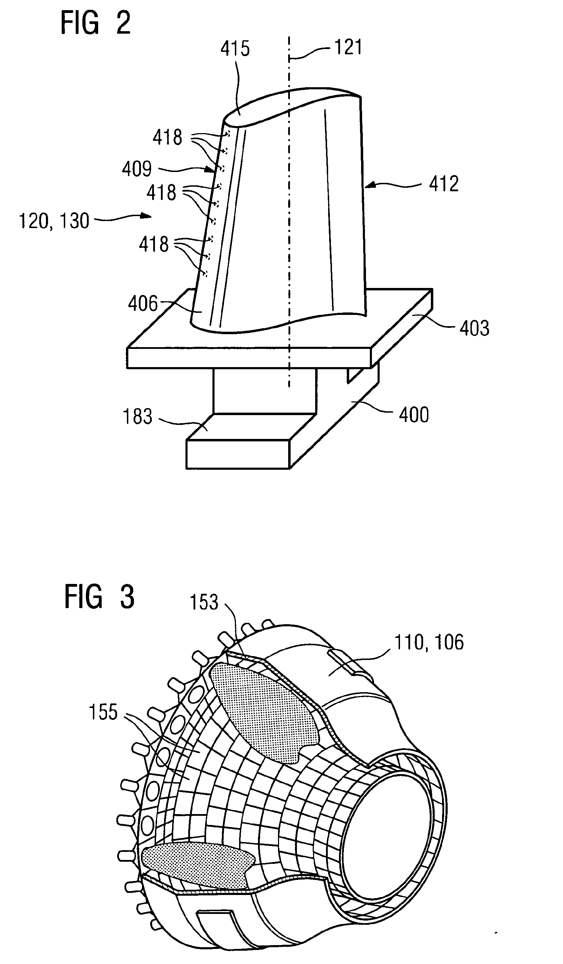

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrA1X-Schicht.

Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrA1X-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse 4 im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

Die Figur 3 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.
Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten können ähnlich der Turbinenschaufeln sein, also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse 4 in dem Hitzeschildelement 155 repariert.

Danach erfolgt eine Wiederbeschichtung der Hitzeschildelemente 155 und ein erneuter Einsatz der Hitzeschildelemente 155.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

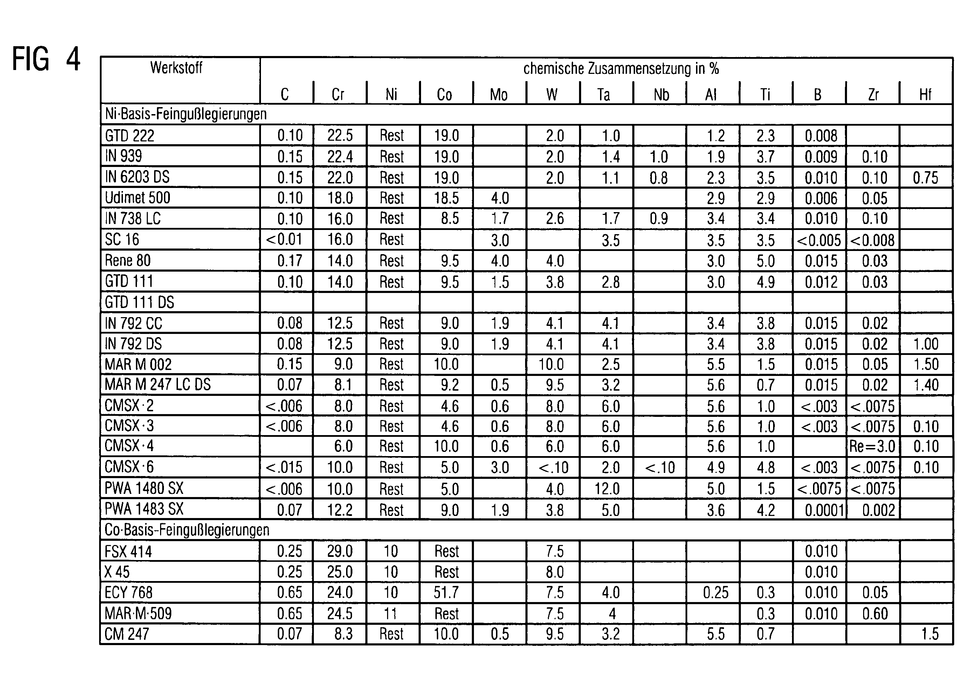

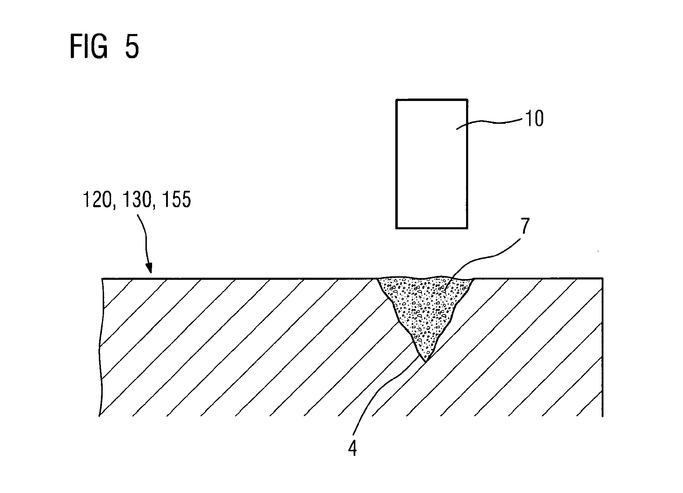

Figur 5 zeigt eine beschädigte Stelle 4 (Riss), die bis 4 mm tief in das Bauteil 120, 130, 155, vorzugsweise mit einer Zusammensetzung gemäß Figur 4, hineinragen kann.

Dabei wird im Bereich der Oberfläche des Risses 4 ein Zusatzwerkstoff 7 aufgetragen. Der Zusatzwerkstoff 7 liegt vorzugsweise in Pulverform vor und kann vorzugsweise als Suspension (auf Alkohol- oder Wasserbasis, mit oder ohne Binder) aufgetragen werden.
Der Binder und das Lösungsmittel werden ggf. ausgetrieben.

Danach wird der Schweißprozess mittels eines Schweißapparats 10 (WIG-Schweißgerät, Laserschweißgerät, ...) durchgeführt, der den Zusatzwerkstoff 7 aufschmilzt. Durch den Zusatzwerkstoff 7 wird eine deutlich erhöhte Schmelzspalttiefe und eine verbesserte Absorption der Laserenergie der Laserstrahlen oder des Plasmas erreicht.

Es hat sich herausgestellt, dass als Zusatzwerkstoff für das Umschmelzen eines Bauteiles es von besonderem Vorteil ist, wenn der Zusatzwerkstoff Siliziumoxid (SiO₂) enthält, das vorzugsweise im Anteil von 42% - 55% enthalten ist. Darüber hinaus kann zu Siliziumoxid Natriumfluorid (NaF), insbesondere mit Anteilen von 6wt% - 10wt% hinzugefügt werden. Eine weitere vorzugsweise zu verwendende Zugabe besteht in Verwendung von Chromoxid (Cr₂O₃), insbesondere mit einem Anteil von 6wt% - 12wt%. Darüber hinaus können Titanoxid (TiO₂) und/oder Titan verwendet werden, wobei vorzugsweise für Titanoxid 10wt% - 20wt% verwendet wird und für Titan ebenfalls 10wt% - 20wt%. Ein Verhältnis von Titan zu Titanoxid von 0,8wt% - 1,2wt% hat sich als besonders sinnvoll erwiesen.

Zu dieser Zusammensetzung aus Siliziumoxid, Natriumfluorid, Chromoxid, Titanoxid, Titan können eine oder mehrere Komponente noch hinzugemischt werden:
Eisenoxid (Fe₂O₃), insbesondere mit einem Anteil von 12wt% - 18wt%,
Aluminiumfluorid (AlF₃), insbesondere mit einem Anteil von 5wt% - 10wt%,
Tellur (Te), insbesondere mit einem Anteil von 2wt% - 6wt% und/oder
Selen (Se) mit einem Anteil von 2wt% - 6wt%.

Ein weiteres Ausführungsbeispiel umfasst in der Zusammensetzung aus 20wt% - 25wt% Siliziumoxid, das darüber hinaus Eisenoxid (Fe₂O₃), insbesondere mit einem Anteil von 15wt% - 20wt%, und/oder Aluminiumfluorid (AlF₃), insbesondere mit einem Anteil von 15wt% - 20wt%, enthält. Darüber hinaus kann als weitere Komponente zu dieser zweiten Zusammensetzung Titanoxid (TiO₂) hinzugefügt werden, insbesondere mit einem Anteil von 20wt% - 25wt% Titanoxid.

Der Zusatzwerkstoff kann folgende Zusammensetzung umfassen, vorzugsweise daraus bestehen (in wt%):
65% - 80% MnO₂
30% - 15% ZnO
2% - 6% Te
2% - 6% Se.

Eine zweite Zusammensetzung kann folgende Zusammensetzung umfassen, vorzugsweise daraus bestehen (in wt%):
15% - 20% AlF₃
15% - 25% Fe₂O₃
20% - 25% SiO₂
20% - 25% TiO₂
2% - 6% Te
2% - 6% Se.

Eine weitere Variante kann folgende Zusammensetzung umfassen, vorzugsweise daraus bestehen (in wt%):
42% - 45% SiO₂
6% - 10% NaF
6% - 12% Cr₂O₃
10% - 20% TiO₂
10% - 20% Ti,
wobei dem Zusatzwerkstoff noch folgende Komponenten zugemischt werden können (in wt%):
12% - 18% Fe₂O₃
5% - 10% AlF₃
2% - 6% Te
2% - 6% Se.

Ebenso ist es erfindungsgemäß denkbar, dass der Zusatzwerkstoff nur aus einer Komponente besteht, also aus 100% MnO₂ oder 100% AlF₃ oder 100% SiO₂ oder Fe₂O₃, 100% TiO₂ oder ZnO₂. Ebenso kann einer der Komponenten MnO₂, AlF₃, SiO₂, Fe₂O₃, TiO₂ oder ZnO₂ die Basis, d. h. ein Volumenanteil größer 50%, für andere erfindungsgemäße Zusatzwerkstoffe darstellen.

Der Zusatzwerkstoff wird vorzugsweise als feinkörniges Pulver (+1µm/-45µm) verwendet. Bevorzugt wird das WIG-Schweißen benutzt. Ebenso können andere Verfahren wie Laserschweißen, Elektronenstrahlschweißen verwendet werden.

Die deutlich verbesserte Schmelzbadtiefe beim Laserschweißen und Umschmelzen von Rissen mit solchen Zusatzwerkstoffen 7 bzw. so genannten oberflächenaktiven Suspensionen wird durch folgende Faktoren beeinflusst:
a: Marangoni-Effekt: die Energie- und Wärmeübertragung beim Schweißen/Umschmelzen erfolgt durch Bewegung von flüssigem Metall im Schmelzbad. Werden die Bewegungen auf der Schmelzbadoberfläche nach Auswärts hingerichtet, wird das Schmelzbad breit und seicht. In einer Bewegung, die Inwärts gerichtet ist, wird das Schmelzbad schmal und tief. Die Art der Bewegung im Schmelzbad wird durch die Oberflächenspannung des flüssigen Metalls beeinflusst. Durch die gezielte Zugabe von oberflächenaktiven Substanzen (Zusatzwerkstoff) ist es möglich, die Oberflächenspannung im Schmelzbad so zu ändern, dass die Bewegung des flüssigen Metalls Inwärts gerichtet ist und damit eine deutlich verbesserte Schmelzbadtiefe erreicht wird.
b: Verbesserte Absorption des Laserstrahls: die oberflächenaktive Substanz wird im Laufe des Schweißprozesses umgeschmolzen und bildet eine sehr dünne Schicht (Schlacke) auf der Schmelzbadoberfläche. Diese dünne Schicht beeinflusst nicht nur die Oberflächenspannung des Schmelzbades, sondern gleichzeitig weist sie deutlich verbesserte Absorptionseigenschaften des Laserstrahls auf als das flüssige Metall des Grundwerkstoffs. Damit ist es möglich, eine verbesserte Energieübertragung und Schmelzbadtiefe zu erzeugen, die unter bestimmten Umständen bis zu 4mm erreichen kann.

Die verbesserte Energieübertragung beim WIG-Schweißen/Umschmelzen mit oberflächenaktiven Substanzen wird durch eine Anreicherung des Lichtbogens mit Elektronen erreicht. Durch diese Anreicherung wird der Lichtbogen verengt und damit eine deutlich höhere Energiedichte und verbesserte Schmelzbadtiefe erzeugt.

## Patentansprüche

1. Zusatzwerkstoff (7) für das Umschmelzen eines Bauteils (1, 120, 130, 155) beim Schweißen,
der Siliziumoxid (SiO₂) enthält.

2. Zusatzwerkstoff (7) nach Anspruch 1,
der 42wt% - 55wt% Siliziumoxid enthält.

3. Zusatzwerkstoff (7) nach Anspruch 1 oder 2,
der Natriumfluorid (NaF) enthält, insbesondere 6wt% - 10wt%.

4. Zusatzwerkstoff (7) nach Anspruch 1, 2 oder 3,
der Chromoxid (Cr₂O₃) enthält, insbesondere 6wt% - 12wt%.

5. Zusatzwerkstoff (7) nach Anspruch 1, 2, 3 oder 4,
der Titanoxid (TiO₂) enthält, insbesondere 10wt% - 20wt%.

6. Zusatzwerkstoff (7) nach Anspruch 1, 2, 3, 4 oder 5,
der Titan (Ti) enthält, insbesondere 10wt% - 20wt%.

7. Zusatzwerkstoff (7) nach Anspruch 5 und 6,
der ein Verhältnis Ti/Ti0₂ von 0,8 bis 1.2 aufweist.

8. Zusatzwerkstoff (7) nach Anspruch 1, 2, 3, 4, 5, 6 oder 7,
der Eisenoxid (Fe₂O₃) enthält,
insbesondere 12wt% - 18wt%.

9. Zusatzwerkstoff (7) nach einem oder mehreren der vorherigen Ansprüche,
der Aluminiumfluorid (AlF₃) enthält,
insbesondere 5wt% - 10wt%.

10. Zusatzwerkstoff (7) nach Anspruch 1,
der 20wt% bis 25wt% Siliziumoxid enthält.

11. Zusatzwerkstoff (7) nach Anspruch 10,
der Eisenoxid (Fe₂O₃) enthält,
insbesondere 15wt% - 20wt% Fe₂O₃.

12. Zusatzwerkstoff (7) nach Anspruch 10 oder 11,
der 15wt% bis 20wt% Aluminiumfluorid (AlF₃) aufweist.

13. Zusatzwerkstoff (7) nach Anspruch 10, 11 oder 12,
der Titanoxid (TiO₂) enthält,
insbesondere 20wt% - 25wt% TiO₂.

14. Zusatzwerkstoff (7) nach Anspruch 1,
bei dem das Siliziumoxid (SiO₂) durch Manganoxid (MnO₂) ersetzt ist,
insbesondere durch 65wt% - 80wt% MnO₂.

15. Zusatzwerkstoff (7) nach Anspruch 1 oder 14,
bei dem das Siliziumoxid (SiO₂) vollständig durch Manganoxid (MnO₂) ersetzt ist.

16. Zusatzwerkstoff (7) nach Anspruch 14 oder 15,
der 65wt% - 80wt% Manganoxid enthält.

17. Zusatzwerkstoff (7) nach Anspruch 14, 15 oder 16,
der Zinkoxid (ZnO) enthält,
insbesondere 15wt% - 30wt%.

18. Zusatzwerkstoff (7) nach einem oder mehreren der vorherigen Ansprüche,
der Manganoxid (MnO₂) und Zinkoxid (ZnO) aufweist.

19. Zusatzwerkstoff (7) nach einem oder mehreren der
vorherigen Ansprüche,
der Tellur (Te) enthält,
insbesondere 2wt% - 6wt% Tellur (Te).

20. Zusatzwerkstoff (7) nach einem oder mehreren der
vorherigen Ansprüche,
der Selen (Se) enthält,
insbesondere 2wt% - 6wt% Selen (Se).

21. Zusatzwerkstoff (7) nach einem oder mehreren der vorherigen Ansprüche,
der Manganoxid (MnO₂), Zinkoxid (ZnO), Tellur (Te) und Selen (Se) aufweist,
insbesondere aus Manganoxid (MnO₂), Zinkoxid (ZnO), Tellur (Te) und Selen (Se) besteht.

22. Zusatzwerkstoff (7) nach einem oder mehreren der
vorherigen Ansprüche,
der Siliziumoxid (SiO₂), Natriumfluorid (NaF), Chromoxid (Cr₂O₃), Titanoxid (TiO₂) und Titan (Ti) aufweist, insbesondere aus Siliziumoxid (SiO₂), Natriumfluorid (NaF), Chromoxid (Cr₂O₃), Titanoxid (TiO₂) und Titan (Ti) besteht.

23. Zusatzwerkstoff (7) nach einem oder mehreren der
vorherigen Ansprüche,
der Siliziumoxid (SiO₂), Eisenoxid (Fe₂O₃), Aluminiumfluorid (AlF₃), Titanoxid (TiO₂), Tellur (Te) und Selen (Se) aufweist,
insbesondere aus Siliziumoxid (SiO₂), Eisenoxid (Fe₂O₃), Aluminiumfluorid (AlF₃), Titanoxid (TiO₂), Tellur (Te) und Selen (Se) besteht.

24. Zusatzwerkstoff (7) nach einem oder mehreren der
vorherigen Ansprüche,
der Siliziumoxid (SiO₂), Natriumfluorid (NaF), Chromoxid (Cr₂O₃), Titanoxid (TiO₂), Titan (Ti), Eisenoxid (Fe₂O₃), Aluminiumfluorid (AlF₃), Tellur (Te) und Selen (Se) aufweist,
insbesondere aus Siliziumoxid (SiO₂), Natriumfluorid (NaF), Chromoxid (Cr₂O₃), Titanoxid (TiO₂), Titan (Ti), Eisenoxid (Fe₂O₃), Aluminiumfluorid (AlF₃), Tellur (Te) und Selen (Se) besteht.

25. Verfahren zum Reparaturschweißen eines Bauteils (120, 130, 155),
bei dem ein Zusatzwerkstoff (7) gemäß einem oder mehreren der vorherigen Ansprüche verwendet wird.

26. Verfahren nach Anspruch 25,
bei dem der Zusatzwerkstoff (7) als Suspension auf den zu reparierenden Riss (4) aufgetragen wird.
